# EUROPEAN PATENT APPLICATION

(11) **EP 4 611 145 A1**
(43) Date of publication of application: **03.09.2025**
(21) Application number: 23913931.4
(22) Date of filing: 03.01.2023
(51) Int. Cl.: H01M 50/289, H01M 50/209, H01M 50/244, H01M 50/204

(54) **BATTERY AND ELECTRIC DEVICE**

(71) Applicant: Contemporary Amperex Technology (Hong Kong) Limited, Hong Kong (HK)
(72) Inventor: LONG, Chao, Ningde, Fujian 352100 (CN); ZAHNG, Wenhui, Ningde, Fujian 352100 (CN); CHEN, Xingdi, Ningde, Fujian 352100 (CN); WANG, Peng, Ningde, Fujian 352100 (CN)
(74) Representative: Gong, Jinping
(86) International application number: PCT/CN2023/070181
(87) International publication number: WO 2024/145771

(57) **Abstract**

Embodiments of this application provide a battery and an electric apparatus. The battery includes a battery pack and a reinforcing member. The battery pack includes multiple battery cells stacked along a first direction; and the reinforcing member extends along the first direction; where the reinforcing member is disposed on at least one side of the battery pack along the first direction, and the reinforcing member is connected to the battery pack. Multiple battery cells are stacked into sets and the arranged battery packs are connected to a same reinforcing member, enhancing the stiffness of the battery with this structure, and making it less likely to deform when subjected to collision and compression. This also improves the vibration resistance of the battery and enhances the reliability and safety of the battery.

## Description

### TECHNICAL FIELD

This application relates to the technical field of batteries, and in particular to a battery and an electric apparatus.

### BACKGROUND

The battery serves as the core power supply of an electric apparatus, and its safety and stability directly affect the use reliability and safety of the electric apparatus. When the electric apparatus is subjected to a collision impact, the battery is easily squeezed and deformed, and even the internal battery cells may be damaged and explode, thus affecting the safety of the user. Therefore, it is urgent to improve the safety and reliability of the battery under collision impact.

### SUMMARY

The main technical issue resolved by this application is to provide a battery and an electric apparatus, which can resolve the issue that the battery is likely to be damaged during collision.

According to a first aspect, this application provides a battery. The battery includes a battery pack and a reinforcing member. The battery pack includes multiple battery cells stacked along a first direction; and the reinforcing member extends along the first direction; where the reinforcing member is disposed on at least one side of the battery pack along the first direction, and the reinforcing member is connected to the battery pack. Multiple battery cells are stacked into sets and the arranged battery packs are connected to a same reinforcing member, enhancing the stiffness of the battery with this structure, and making it less likely to deform when subjected to collision and compression. This also improves the vibration resistance of the battery and enhances the reliability and safety of the battery.

In some embodiments, adjacent two of the multiple battery cells along the first direction are connected using an adhesive. This design manner can keep the relative positions of two adjacent battery cells fixed, reducing the probability of separating adjacent battery cells within the battery pack, and facilitating assembly.

In some embodiments, a maximum size of the reinforcing member along the first direction is larger than a maximum size of the battery pack along the first direction. When the battery is subjected to external impact in the first direction, the reinforcing member absorbs the external compressive force, and the battery pack retracts inwards relative to the reinforcing member in the first direction. Therefore, the battery pack does not absorb the external compressive force, reducing the probability of the battery pack being squeezed and deformed. Additionally, the reinforcing member can transfer the external impact received at one end to the other end of the reinforcing member, further buffering the external impact and improving the safety of the battery.

In some embodiments, two ends of the reinforcing member along the first direction exceed the battery pack. When the battery is subjected to external impact in the first direction, the impact force first comes into contact with the reinforcing member, and the reinforcing member absorbs the external compressive force, reducing the probability of the battery pack being squeezed and deformed.

In some embodiments, multiple reinforcing members are provided, at least two of the multiple reinforcing members are respectively located on two sides of the battery pack along the first direction, and the reinforcing members on two sides of the battery pack along the first direction are both connected to the battery pack. This design manner allows for high structural stability between the battery pack and the reinforcing member.

In some embodiments, the reinforcing member is configured to be connected to a surface with a greatest area of the battery cell. This design manner allows for a large connection area between the reinforcing member and the battery cell, enhancing the structural stability of the battery.

In some embodiments, the reinforcing member has a heat exchange chamber, and the heat exchange chamber is used for accommodating a heat exchange medium. When the reinforcing member absorbs the external compressive force to reduce the probability of the battery pack being squeezed and deformed, it also serves the heat exchange function, so that the battery does not need to be additionally provided with a heat exchange member, thereby reducing costs.

In some embodiments, the reinforcing member is adhered to the battery cell. This design manner can keep the relative positions of the reinforcing member and the battery cell fixed, reducing the probability of separating the reinforcing member and the battery cell, and facilitating assembly.

In some embodiments, multiple battery packs are provided, multiple reinforcing members are provided, the multiple battery packs are side by side along a second direction, and the second direction intersects the first direction, and one of the multiple reinforcing members is located between adjacent two of the battery packs and is connected to the two adjacent battery packs. This design manner allows for high structural stability between the battery pack and the reinforcing member.

In some embodiments, the battery further includes an end plate, the end plate is located at an end of the reinforcing member along the first direction, and the reinforcing member is connected to the end plate. The end plate is disposed at the end of the reinforcing member in the first direction, such that when the battery is squeezed and deformed in the first direction, the external impact force in the first direction is further absorbed, reducing the probability of the impact force damaging the battery pack.

In some embodiments, the battery further includes a bottom plate and a cover plate, the bottom plate and the cover plate are respectively located on two mutually parallel side surfaces of the battery pack along the first direction, the bottom plate is opposite the cover plate, and the reinforcing member is connected to at least one of the bottom plate and the cover plate. This design manner can improve the safety of the battery.

In some embodiments, the battery further includes a frame, the frame encloses a middle space, and the battery pack is located in the middle space. The battery further includes a buffer member, and along the first direction, the buffer member is located between the battery pack and an inner surface of the frame. This design manner can maintain the shape of the battery, with the battery pack placed in the frame, reducing the probability of dispersing the battery pack. When the end plate is squeezed and deformed in the first direction, the buffer member can absorb the external impact force, reducing the damage to the battery pack caused by the impact force.

In some embodiments, as multiple battery packs are provided, multiple reinforcing members are provided, the reinforcing members and the battery packs are arranged alternately, and the buffer member is sandwiched between adjacent two of the reinforcing members. This design manner can better protect the battery pack.

In some embodiments, the reinforcing member includes the heat exchange chamber, the heat exchange chamber is used for accommodating the heat exchange medium, the battery further includes a current collecting tube, and the current collecting tube is connected to an end of the reinforcing member along the first direction to communicate with the heat exchange chamber, and the buffer member includes an avoidance groove, and the avoidance groove corresponds to the current collecting tube in position. The reinforcing members are connected to form a loop via a current collecting tube, facilitating the flow of the heat exchange medium. A buffer member is provided outside the current collecting tube, which can reduce the damage to the current collecting tube caused by the compressive force.

In some embodiments, the avoidance groove is located on a surface of the buffer member away from the battery cell along the first direction. This design manner ensures that the surface of the buffer member with the avoidance groove does not directly contact the battery cell, preventing stress concentration on the battery cell.

In some embodiments, the battery further includes a bottom plate, the bottom plate is connected to the frame, and a bottom of the buffer member facing the bottom plate is provided with a guiding structure. The guiding structure facilitates the operator in correctly placing the buffer member into the middle space. The buffer member can also be fixedly connected to the battery pack first, providing a guiding function when the battery pack is mounted into the middle space.

In an embodiment, the battery further includes a separating member, the separating member is located in the frame, the separating member extends along the first direction and is connected to an inner surface of the frame, so as to separate the middle space into at least two sub-spaces, and at least one of the at least two sub-spaces is used for accommodating the battery pack and the reinforcing member. This design manner can alleviate the swelling of the battery pack and enhance the stiffness of the battery.

According to a second aspect, this application provides an electric apparatus including the battery in the foregoing embodiments, where the battery is configured to supply electric energy to the electric apparatus.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to some embodiments of this application;
FIG. 2 is an exploded view of a battery according to an embodiment;
FIG. 3 is a top view of a battery in FIG. 2 after a cover plate is removed according to an embodiment.
FIG. 4 is a cross-sectional view along a section line A-A in FIG. 3 according to an embodiment.
FIG. 5 is a locally enlarged view at part B in FIG. 3 according to an embodiment.
FIG. 6 is a schematic structural view of a buffer member according to some embodiments of this application;
FIG. 7 is a right side view of the buffer member according to some embodiments of this application; and
FIG. 8 is a schematic structural view of a frame and a separating member according to some embodiments of this application.

In the accompanying drawings, the figures are not necessarily drawn to scale.
Reference numerals: vehicle 1000; battery 100; controller 200; motor 300;
first direction X; second direction Y; third direction Z;
frame 10; end plate 11; side plate 12;
battery pack 20; battery cell 21; second surface 211; busbar 22; output electrode base 23;
reinforcing member 31; first assembly gap 311; buffer member 32; first spacing 321; first surface 322; third surface 323; guide surface 3231; top abutment surface 3232; avoidance groove 324;
bottom plate 40; cover plate 50; current collecting tube 60;
first separating member 70; second separating member 80; and notch portion 81.

### DETAILED DESCRIPTION OF EMBODIMENTS

The following further describes implementations of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not strictly perpendicular, but within the allowable range of error. "Parallel" is not strictly parallel, but within the allowable range of error.

The orientation terms appearing in the following description all are directions shown in the figures, and do not limit the specific structure of the application. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

At present, from the perspective of market development prospects and application trends, batteries have been widely used in various fields due to their advantages of high energy density, high power density, multiple cycles of use, and long storage time. For example, they are applied to various energy storage power systems such as hydroelectric power plants, thermal power plants, wind power plants, and solar power plants, and provide power for high-power apparatus such as electric vehicles including electric bicycles, electric motorcycles, electric automobiles, and the like, and are used in many fields of, for example, military equipment and aerospace. With the continuous expansion of battery application fields, the market requirements for batteries are also constantly increasing.

Currently, it is common to use a battery composed of multiple battery cells connected in series and parallel as a power source. When the battery is used as the power source of an electric vehicle, the inventors of this application noticed that when the width direction (that is, the direction perpendicular to the length direction or driving direction of the electric vehicle) of the electric vehicle collides, the battery is squeezed and deformed. The battery cells in the battery are likely to be damaged after squeezed, leading to a leakage of an electrolyte therein, which may cause multiple components in the battery to become electrified, thereby affecting the safety of the vehicle.

To resolve the above technical issue that a vehicle collision damages the battery cell, the inventors have found through research that reinforcing members can be designed. The reinforcing members are spaced apart between the battery packs, and the ends of the reinforcing members are close to a frame relative to the battery packs. After the frame of the battery is squeezed and deformed, the frame contacts a reinforcing member, and the reinforcing member transfers the compressive force to the opposite frame, further alleviating the compressive force on the battery caused by the vehicle collision and reducing the probability of damaging the battery cell.

After further in-depth research, the inventors also designed a buffer member. Specifically, a space between the outermost side of the battery pack and the frame of the battery is filled with the buffer member. When the vehicle body collides, the buffer member buffers the stress generated by the frame of the battery.

The battery disclosed in the embodiments of this application can be used not only to buffer the impact on the battery cells caused by collision in the width direction of the vehicle body but also to buffer the impact on the battery cells caused by collision in the length direction of the vehicle body.

The battery cell disclosed in the embodiments of this application can be used for electric apparatuses that use a battery as a power source or various energy storage systems that use a battery as an energy storage component. The electric apparatus may be but is not limited to a mobile phone, a tablet computer, a laptop computer, an electric toy, an electric tool, an electric bicycle, an electric vehicle, a ship, and a spacecraft. The electric toy may be a fixed or mobile electric toy, for example, a game console, an electric toy car, an electric toy ship, or an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

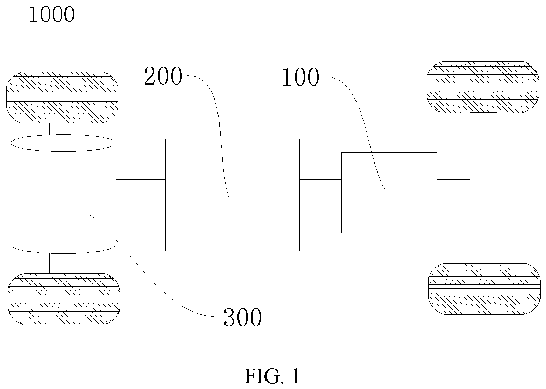

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

The battery 100 in this application is a physical module that includes one or more battery cells for providing electric energy. The battery 100 typically includes a box configured to enclose one or more battery cells. The box can prevent liquids or other foreign matter from affecting charge or discharge of the battery cells.

Optionally, the battery cell may be a secondary battery or a primary battery, and may be a lithium-ion battery, a lithium-sulfur battery, a sodium-lithium ion battery, a sodium-ion battery, or a magnesium-ion battery, and the like, which is not limited in the embodiments of this application. The battery cell may be in the shape of a cylinder, a flat body, a cuboid, or of other shapes, and is not limited herein.

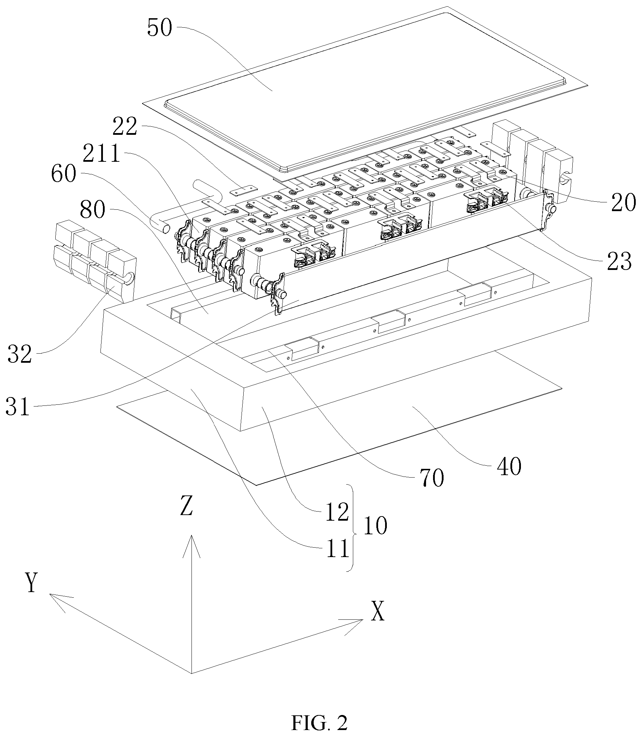

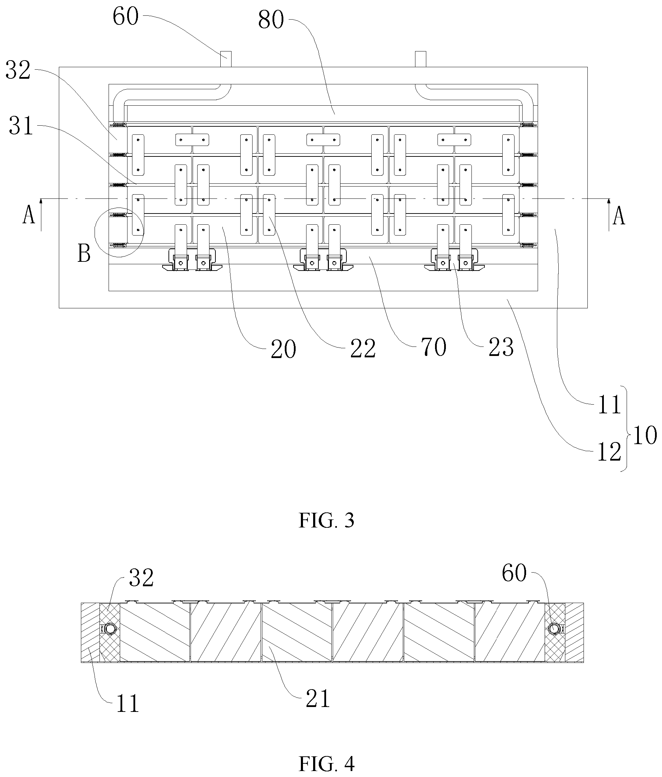

According to some embodiments of this application, referring to FIGs. 2 and 3, FIG. 2 is an exploded view of a battery 100 according to an embodiment, FIG. 3 is a top view of a battery 100 in FIG. 2 after a cover plate 50 is removed according to an embodiment, and FIG. 4 is a cross-sectional view along a section line A-A in FIG. 3 according to an embodiment. For convenience of description, in the general industries, the width direction of the vehicle 1000 is defined as the first direction X of the battery 100, the driving direction or length direction of the vehicle 1000 is defined as the second direction Y of the battery 100, and the height direction of the vehicle 1000 is defined as the third direction Z of the battery 100. According to an embodiment of this application, a battery 100 is provided. The battery 100 includes a battery pack 20 and a reinforcing member 31. The battery pack 20 includes multiple battery cells 21 stacked along a first direction X; and the reinforcing member 31 extends along the first direction X; where the reinforcing member 31 is disposed on at least one side of the battery pack 20 along the first direction X, and the reinforcing member 31 is connected to the battery pack 20.

Optionally, in this embodiment, as shown in FIG. 2, one or more battery packs 20 may be provided, and when multiple battery packs 20 are provided, the multiple battery packs 20 may be arranged sequentially along the second direction Y. In this embodiment, the electrodes between multiple battery packs 20 may be connected using well-known methods in the art. For example, the electrode plates of the battery packs 20 are welded together using busbars 22, enabling the multiple battery packs 20 to form a series-parallel energy block. In the second direction Y, the outermost busbar 22 of the outermost battery pack 20 may be bent, and the bent busbar 22 is connected to the output electrode base 23 to form an external output interface, thereby enabling the battery 100 to supply power to the vehicle 1000.

Optionally, as shown in FIG. 2, being on at least one side of the battery pack 20 along the first direction X may be understood as being in the second direction Y of the battery pack 20. Further, the position of the reinforcing member 31 may be understood as that the reinforcing member 31 is disposed on one side of the battery pack 20 in the second direction Y, or the reinforcing member 31 is disposed on the other side of the battery pack 20 in the second direction Y, or as shown in FIGs. 2 and 3, the reinforcing member 31 is disposed on two sides of the battery pack 20 in the second direction Y. Further, the reinforcing member 31 and the adjacent battery pack 20 may be fixedly connected by welding, FlowDrill Screw (FlowDrill Screw, FDS), adhering, or other methods.

In summary, in the above technical solution, the multiple battery cells 21 are stacked into sets and the arranged battery packs 20 are connected to a same reinforcing member 31, enhancing the stiffness of the battery 100 with this structure, and making it less likely to deform when subjected to collision and compression. This also improves the vibration resistance of the battery 100 and enhances the reliability and safety of the battery 100.

According to some embodiments of this application, optionally, referring to FIGs. 2 and 3, adjacent two of the multiple battery cells 21 along the first direction X are connected using an adhesive.

Optionally, the structure of the battery cell 21 may be a cuboid, a cylinder, or the like, and is not limited herein. When the structure of the battery cell 21 is a cuboid, the adhesive layer between two adjacent battery cells 21 along the first direction X can completely cover the surfaces of the adjacent battery cells 21. Additionally, two adjacent battery cells 21 may be adhered using a thermally conductive structural adhesive or double-sided adhesive, and is not limited herein. In the first direction X, the adjacent end faces of the battery cells 21 in the same battery pack 20 are fixed using an adhesive. This adhesion may be completed using a thermally conductive structural adhesive or double-sided adhesive, and is not limited herein.

This design manner can keep the relative positions of two adjacent battery cells 21 fixed, reducing the probability of separating adjacent battery cells 21 within the battery pack 20, and facilitating assembly.

According to some embodiments of this application, a maximum size of the reinforcing member 31 along the first direction X is larger than a maximum size of the battery pack 20 along the first direction X.

Specifically, the maximum size of the reinforcing member 31 along the first direction X is larger than the maximum size of the battery pack 20 along the first direction X, which may mean that the maximum length of the reinforcing member 31 along the first direction X is greater than the maximum length of the battery pack 20 along the first direction X.

This design manner of the dimensions can make at least one end of the reinforcing member 31 along the first direction X exceed the battery pack 20. When the battery 100 is subjected to external impact in the first direction X, the reinforcing member 31 absorbs the external compressive force, and the battery pack 20 retracts inwards relative to the reinforcing member 31 in the first direction X. Therefore, the battery pack 20 does not absorb the external compressive force, reducing the probability of the battery pack 20 being squeezed and deformed. Additionally, the reinforcing member 31 can transfer the external impact received at one end to the other end of the reinforcing member 31, further buffering the external impact and improving the safety of the battery 100.

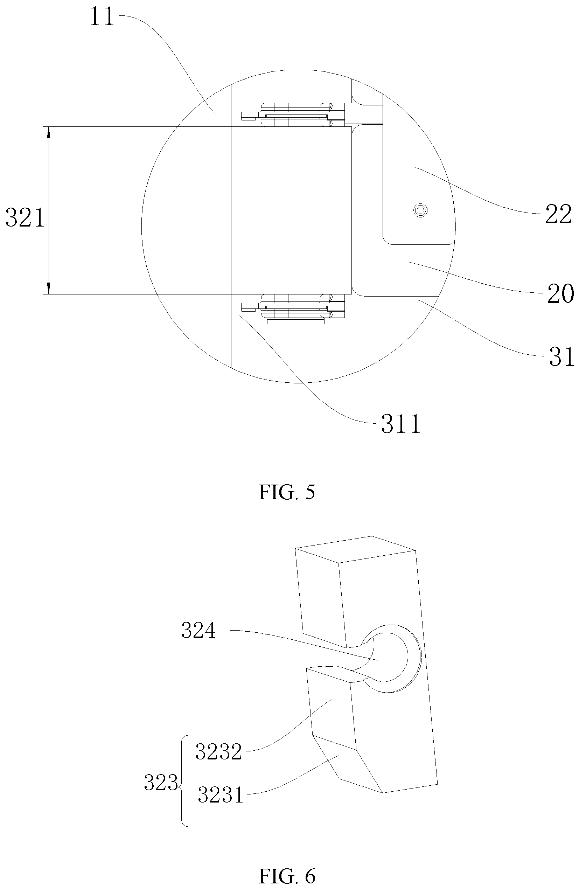

Preferably, referring to FIG. 3 and FIG. 5, FIG. 5 is a locally enlarged view at part B in FIG. 3 according to an embodiment. Two ends of the reinforcing member 31 along the first direction X exceed the battery pack 20. When the battery 100 is subjected to external impact in the first direction X, the impact force first comes into contact with the reinforcing member 31, and the reinforcing member 31 absorbs the external compressive force, reducing the probability of the battery pack 20 being squeezed and deformed.

According to some embodiments of this application, as shown in FIGs. 3 and 5, multiple reinforcing members 31 are provided, at least two of the multiple reinforcing members 31 are respectively located on two sides of the battery pack 20 along the first direction X (that is, the second direction Y of the battery pack 20), and the reinforcing members 31 on two sides of the battery pack 20 along the first direction X are both connected to the battery pack 20.

Specifically, as shown in FIGs. 2 and 3, in the second direction Y, the reinforcing members 31 may be disposed on both sides of any set of battery packs 20, and the reinforcing members 31 may be fixedly connected to the adjacent battery packs 20. The specific connection method may be adhesion using a thermally conductive structural adhesive or double-sided adhesive. This design manner allows for high structural stability between the battery pack 20 and the reinforcing member 31.

According to some embodiments of this application, the reinforcing member 31 is configured to be connected to a surface with a maximum area of the battery cell 21. This design manner allows for a large connection area between the reinforcing member 31 and the battery cell 21, enhancing the structural stability of the battery 100.

According to some embodiments of this application, the reinforcing member 31 has a heat exchange chamber (not shown in the figure), and the heat exchange chamber is used for accommodating a heat exchange medium.

Specifically, a heat exchange chamber is provided in the reinforcing member 31, and one or more heat exchange chambers may be provided, which is not limited herein. For example, when it is necessary to cool the battery pack 20, the heat exchange medium may be a cold fluid. After passing through the heat exchange chamber, the cold fluid can reduce heat conduction between two adjacent sets of battery packs 20, preventing a chain reaction caused by thermal runaway of a single battery cell 21, thus enhancing the safety of the battery 100.

In summary, when the reinforcing member 31 absorbs the external compressive force to reduce the probability of the battery pack 20 being squeezed and deformed, it also serves the heat exchange function, so that the battery 100 does not need to be additionally provided with a heat exchange member, thereby reducing costs.

According to some embodiments of this application, the reinforcing member 31 is adhered to the battery cell 21.

Specifically, the adjacent side surfaces of the reinforcing member 31 and the adjacent battery cell 21 are adhered and fixed to each other. In other words, the side surface of the battery cell 21 in the second direction Y is adhered and fixed to the reinforcing member 31. This design manner can keep the relative positions of the reinforcing member 31 and the battery cell 21 fixed, reducing the probability of separating the reinforcing member 31 and the battery cell 21, and facilitating assembly.

This adhesion may be completed using a thermally conductive structural adhesive or double-sided adhesive, and is not limited herein.

According to some embodiments of this application, multiple battery packs 20 are provided, multiple reinforcing members 31 are provided, the multiple battery packs 20 are side by side along a second direction Y, and the second direction Y intersects the first direction X, and one of the multiple reinforcing members 31 is located between adjacent two of the battery packs 20 and is connected to the two adjacent battery packs 20.

Specifically, referring to FIGs. 2 and 3, in the second direction Y, a reinforcing member 31 may be disposed between any two adjacent sets of battery packs 20, and the reinforcing members 31 may be fixedly connected to the adjacent battery packs 20. The specific connection method may be adhesion using a thermally conductive structural adhesive or double-sided adhesive. This design manner allows for high structural stability between the battery pack 20 and the reinforcing member 31.

According to some embodiments of this application, the battery 100 further includes an end plate 11, the end plate 11 is located at an end of the reinforcing member 31 along the first direction X, and the reinforcing member 31 is connected to the end plate 11.

The end plate 11 is provided at the end of the reinforcing member 31 in the first direction X, which may mean that the end plate 11 is provided at both ends of the reinforcing member 31 in the first direction X, or that the end plate 11 is provided at one of the two ends of the reinforcing member 31 in the first direction X. The reinforcing member 31 may be connected to the end plate 11 in the first direction X by welding, adhering, abutting, and the like, which is not limited herein.

Taking abutment as an example, when the end plate 11, the battery pack 20, and the reinforcing member 31 are assembled to form the battery 100, the reinforcing member 31 does not contact the end plate 11; after the battery 100 is subjected to external impact in the first direction X, the reinforcing member 31 contacts the end plate 11, causing an abutment, and the reinforcing member 31 absorbs the external compressive force. Alternatively, the reinforcing member 31 can abut against the end plate 11 in the first direction X, which may mean that when the end plate 11, the battery pack 20, and the reinforcing member 31 are assembled to form the battery 100, the reinforcing member 31 directly contacts the end plate 11 to cause an abutment, and after the battery 100 is subjected to external impact in the first direction X, the reinforcing member 31 directly absorbs the external impact force.

The end plate 11 is disposed at the end of the reinforcing member 31 in the first direction X, such that when the battery 100 is squeezed and deformed in the first direction X, the external impact force in the first direction X is further absorbed, reducing the probability of the impact force damaging the battery pack 20.

According to some embodiments of this application, the battery 100 further includes a bottom plate 40 and a cover plate 50, the bottom plate 40 and the cover plate 50 are respectively located on two mutually parallel side surfaces of the battery pack 20 along the first direction X, the bottom plate 40 is opposite the cover plate 50, and the reinforcing member 31 is connected to at least one of the bottom plate 40 and the cover plate 50.

Specifically, as shown in FIG. 2, the battery 100 further includes a cover plate 50 and a bottom plate 40 that are spaced apart along the third direction Z, which is perpendicular to the first direction X and the second direction Y. Further, the reinforcing member 31 may be connected to the cover plate 50. The reinforcing member 31 may also be connected to the bottom plate 40; or the reinforcing member 31 may be connected to both the cover plate 50 and the bottom plate 40 simultaneously. The connection may be fixed by welding, FDS (FlowDrill Screw, thermal self-tapping technology), adhering, or the like. This design can improve the safety of the battery 100.

According to some embodiments of this application, referring to FIGs. 2 and 3, the battery 100 further includes a frame 10, the frame 10 encloses a middle space, and the battery pack 20 is located in the middle space. The battery 100 further includes a buffer member 32, and along the first direction X, the buffer member 32 is located between the battery pack 20 and an inner surface of the frame 10.

Specifically, in this embodiment, the frame 10 includes two end plates 11 and two side plates 12, the two end plates 11 are spaced apart along the first direction X, the two side plates 12 are spaced apart along the second direction Y, and the two end plates 11 are perpendicular to the two side plates 12, so the formed middle space may be in the shape of a rectangular box. Certainly, in other embodiments, the middle space may also be of different shapes, which is not excessively limited in this application. Further, the adjacent end plate 11 and the side plate 12, which are adjacent to each other, are fixedly connected, and the specific connection method may be welding, FDS (FlowDrill Screw, thermal self-tapping technology), adhering, and the like. Alternatively, they may be integrally formed by casting. This design can maintain the shape of the battery 100, with the battery pack 20 placed in the frame 10, reducing the probability of dispersing the battery pack 20.

Further, the cover plate 50 and the bottom plate 40 fit with the frame 10 to form a sealed middle space. This design manner can reduce the erosion of external moisture or the like on the battery pack 20 in the middle space, thereby protecting the battery pack 20. Further, the cover plate 50, the bottom plate 40, and the frame 10 can be fixedly connected by welding, FDS (FlowDrill Screw, thermal self-tapping technology), adhering, and the like.

It should be noted that in the above embodiment, the frame 10 includes an end plate 11 connected to the reinforcing member 31. In other embodiments, the end plate 11 and the frame 10 may also be independent components. That is, the frame 10 and the reinforcing member 31 are connected via an additional end plate 11, which is not limited in this application.

In the first direction X, at least one end of the battery pack 20 has a first spacing 321 with the adjacent end plate 11, and the buffer member 32 is located within the first spacing 321. In the first direction X, both ends of the buffer member 32 can be connected to the end plate 11 and the battery pack 20 respectively, so that when one of the two end plates 11 is subjected to external impact, the impact force is transmitted through the battery pack 20 and the buffer member 32 to the other of the two end plates 11, while being absorbed by the buffer member 32. The connection methods of the buffer member 32 with the battery pack 20 and the frame 10 include welding, adhering, abutting, and the like.

Optionally, taking abutment as an example, in the first direction X, both ends of the buffer member 32 can abut against the end plate 11 and the battery pack 20 respectively, which may mean that when the buffer member 32 is mounted, both ends of the buffer member 32 do not come in contact with the end plate 11 and the battery pack 20, and when the battery 100 is subjected to external impact, both ends of the buffer member 32 abut against the end plate 11 and the battery pack 20 respectively, while the buffer member 32 absorbs the impact force; or mean that when the buffer member 32 is mounted, both ends of the buffer member 32 directly abut against the end plate 11 and the battery pack 20, and when the battery 100 is subjected to external impact, the buffer member 32 directly absorbs the impact force, reducing the probability of the impact force damaging the battery pack 20.

In summary, in the first direction X, when the end plate 11 is squeezed and deformed, the buffer member 32 can absorb the external impact force, and the external impact force can also be transmitted through the reinforcing member 31 to the buffer member 32 at the other end. The buffer members 32 at both ends can absorb the impact force, reducing the damage to the battery pack 20 caused by the impact force.

In a specific embodiment, the material of the buffer member 32 may be, but is not limited to, foam, ceramic fiber, and other thermally insulating and deformable materials. When there are multiple buffer members 32 adjacent to the same end plate 11 in the first direction X, the multiple buffer members 32 may be independently formed and mounted in the corresponding first spacings 321 respectively. Alternatively, the multiple buffer members 32 may also be connected to each other and formed integrally, and mounted in the corresponding first spacing 321 simultaneously.

According to some embodiments of this application, referring to FIGs. 3 and 4, as the multiple battery packs 20 and the multiple reinforcing members 31 are provided, the reinforcing members 31 and the battery packs 20 are arranged alternately, and the buffer member 32 is sandwiched between adjacent two of the reinforcing members 31.

In the first direction X, a first assembly gap 311 is present between the end of the reinforcing member 31 and the adjacent end plate 11, and the size of the first spacing 321 along the first direction X is larger than the size of the first assembly gap 311 along the first direction X.

From the assembly perspective, the reinforcing member 31 does not fully contact the end plates 11 at both ends, and a small gap, that is, the first assembly gap 311 is present between the reinforcing member 31 and the frame 10, making it convenient for the operator to place the reinforcing member 31 into the frame 10 during mounting of the battery 100. To ensure that after the end plate 11 is squeezed and deformed, the reinforcing member 31 can abut against the end plate 11 to buffer the impact stress, and thus the size of the first assembly gap is smaller than the size of the first spacing. After the frame 10 deforms as the battery 100 is subjected to compressive force, the first assembly gap 311 between the frame 10 and the reinforcing member 31 is eliminated, and the frame 10 contacts the reinforcing member 31, releasing stress and reducing the probability of the frame 10 damaging the battery pack 20.

In the first direction X, the stiffness of the reinforcing member 31 is greater than the stiffness of the buffer member 32. The buffer member 32 is made of a thermally insulating and deformable material such as foam or ceramic fiber, and the reinforcing member 31 is made of a metal material such as alloy. Due to the high stiffness of the reinforcing member 31, the probability of deformation of the reinforcing member 31 when the impact stress is buffered is low, allowing for high stability of the overall structure formed by the reinforcing member 31 and the battery pack 20. Due to the low stiffness of the buffer member 32, it can buffer stress through deformation and other means, reducing the stress on the side of the battery pack 20 facing the end plate 11.

In the first direction X, both ends of the battery pack 20 have first spacings 321 with the two end plates 11, and buffer members 32 are arranged in the first spacings 321.

In the first direction X, the end plate 11, the buffer member 32, the battery pack 20, the buffer member 32, and the end plate 11 are sequentially arranged to form the battery 100. The buffer members 32 are arranged in the both first spacings 321. When both sides of the battery 100 collide, the buffer members 32 at both ends can absorb the impact force. When one side of the battery 100 collides, the buffer member 32 at one end absorbs the impact force, while the reinforcing member 31 transmits the impact force to the buffer member 32 at the other end, and the buffer member 32 at the other end can also absorb the impact force. In this way, the buffer members 32 at both ends can absorb the impact force, better protecting the battery pack 20.

According to some embodiments of this application, referring to FIG. 6, the reinforcing member 31 includes the heat exchange chamber, the heat exchange chamber is used for accommodating the heat exchange medium, the battery 100 further includes a current collecting tube 60, and the current collecting tube 60 is connected to an end of the reinforcing member 31 along the first direction X to communicate with the heat exchange chamber, and the buffer member 32 includes an avoidance groove 324, and the avoidance groove 324 corresponds to the current collecting tube 60 in position.

Specifically, the two ports of the heat exchange chamber in the reinforcing member 31 are connected to the two current collecting tubes 60 outside the reinforcing member 31, and the two current collecting tubes 60 pass through the frame 10 to be connected to the outside of the battery 100. The current collecting tubes 60 deliver the external heat exchange medium to the heat exchange chamber. The heat exchange medium flows inside the heat exchange chamber to cool the battery pack 20, and after cooling, it enters another current collecting tube 60 and is delivered to the outside of the battery 100. The two current collecting tubes 60 pass through the frame 10. Specifically, two openings may be provided on the second side plate 12, and the current collecting tubes 60 pass through the openings to be connected to an external storage apparatus of the heat exchange medium. The heat exchange medium may be condensate water.

In the first direction X, two ports are respectively arranged at both ends of the reinforcing member 31. The current collecting tube 60 passes through the buffer member 32 and the port adjacent to the buffer member 32 along the second direction Y. That is, in this case, the current collecting tube 60 is arranged between the reinforcing member 31 and the end plate 11 and extends along the second direction Y. The two ports of the current collecting tube 60 are respectively connected to both ends of the reinforcing member 31, thus forming a loop between the reinforcing members 31 through the current collecting tube 60, facilitating the flow of the heat exchange medium. A buffer member 32 is provided outside the current collecting tube 60, which can reduce the damage to the current collecting tube 60 caused by the compressive force.

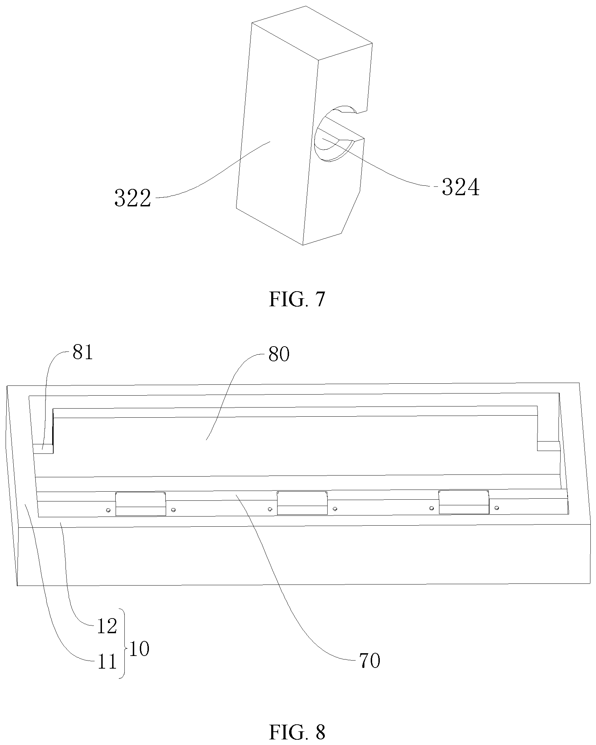

According to some embodiments of this application, referring to FIG. 2, FIG. 6, and FIG. 7. FIG. 6 and FIG. 7 are respectively a schematic structural diagram and a right side view of the buffer member 32 according to some embodiments of this application. The avoidance groove 324 is located on the surface of the buffer member 32 away from the battery cell 21 along the first direction X.

In the first direction X, the buffer member 32 includes a first surface 322 facing the battery pack 20. The outermost battery cell 21 of the battery pack 20 includes a second surface 211 facing the buffer member 32. The first surface 322 is identical to the adjacent second surface 211, and the first surface 322 is adhered to the second surface 211 via a second adhesive layer.

When the battery cell 21 is a cuboid, the second surface 211 of the battery cell 21 is a rectangular plane, and the first surface 322 of the buffer member 32 is a rectangular plane identical to the second surface 211 of the battery cell 21. When the battery cell 21 is a cylinder, the second surface 211 of the battery cell 21 is a curved surface, and the first surface 322 of the buffer member 32 is a complete curved surface wrapping the second surface 211 of the battery cell 21. When the battery cell 21 is of another shape, it is only necessary to change the contact surface of the buffer member 32 with the battery cell 21 to the shape of the side surface of the battery cell 21.

The first surface 322 of the buffer member 32 and the second surface 211 of the battery cell 21 are completely fitted and connected via the second adhesive layer. The first surface 322 is identical to the adjacent second surface 211, which can disperse the compressive force and reduce stress concentration. The first surface 322 is adhered to the second surface 211 via the second adhesive layer, reducing the probability of separation between the buffer member 32 and the battery pack 20.

The buffer member 32 is provided with an avoidance groove 324 on the side facing the adjacent end plate 11. The current collecting tube 60 passes through the avoidance groove 324 and is in contact with at least part of the inner wall of the avoidance groove 324.

The avoidance groove 324 of the buffer member 32 matches the structure of the current collecting tube 60, allowing the buffer member 32 to wrap around the current collecting tube 60, fixing and protecting the position of the current collecting tube 60, and reducing the movement of the current collecting tube 60. The side of the buffer member 32 facing the adjacent battery cell 21 is a complete plane, ensuring that the surface of the buffer member 32 with the avoidance groove 324 does not directly contact the battery cell 21, thereby preventing stress concentration on the battery cell 21.

In some embodiments of this application, the battery 100 further includes a bottom plate 40, the bottom plate 40 is connected to the frame 10, and a bottom of the buffer member 32 facing the bottom plate 40 is provided with a guiding structure.

The buffer member 32 is provided with a guide surface 3231 on the side facing the adjacent end plate 11. The guide surface 3231 is configured to interfere with the end plate 11 when the buffer member 32 is placed into the middle space along the third direction Z perpendicular to the first direction X and the second direction Y, thereby guiding the buffer member 32 into the middle space.

In the first direction X, the buffer member 32 includes a third surface 323 facing the adjacent end plate 11; and in the direction of the cover plate 50 pointing to the bottom plate 40, the third surface 323 includes a top abutment surface 3232 and a guide surface 3231 interconnected to each other. The top abutment surface 3232 abuts against the adjacent end plate 11, and the guide surface 3231 gradually leaves the adjacent end plate 11. The guide surface 3231 is a slope. During the process of placing the buffer member 32 into the middle space, the initial contact size is small, and as it enters the middle space, the size gradually increases until the entire buffer member 32 is placed into the middle space.

The guiding structure facilitates the operator in correctly placing the buffer member 32 into the middle space. The buffer member 32 can also be fixedly connected to the battery pack 20 first, providing a guiding function when the battery pack 20 is mounted into the middle space.

After the battery 100 is mounted, the buffer member 32 may come in contact with and abut against the bottom plate 40, or the buffer member 32 may come in contact with and abut against the cover plate 50, or the buffer member 32 may come in contact with and abut against both the bottom plate 40 and the cover plate 50. In the third direction Z, the height of the buffer member 32 is equal to the height of the frame 10, the height of the frame 10 is greater than the height of the battery pack 20, and the height of the battery pack 20 is greater than or equal to the height of the buffer member 32. The above design manner allows the stress absorbed by the buffer member 32 to be transmitted to the bottom plate 40 and/or the cover plate 50 abutting against it, thereby further reducing the impact on the battery pack 20.

According to some embodiments of this application, still refer to FIG. 3 and FIG. 8. FIG. 8 is a schematic structural diagram of the frame 10 and the separating member according to some embodiments of this application. The battery 100 further includes a separating member, the separating member is located in the frame 10, the separating member extends along the first direction X and is connected to an inner surface of the frame 10, so as to separate the middle space into at least two sub-spaces, and at least one of the at least two sub-spaces is used for accommodating the battery pack 20 and the reinforcing member 31.

Specifically, the separating member includes a first separating member 70 and a second separating member 80. The first separating member 70 and the second separating member 80 are arranged in the middle space and are spaced apart between the two second side plates 12 along the second direction Y. The first separating member 70 and the second separating member 80 are further bridged between the two end plates 11 along the first direction X. Multiple battery packs 20 are elastically clamped between the first separating member 70 and the second separating member 80 along the second direction Y.

During assembly of the battery 100, the battery packs 20 are first adhered using the reinforcing member 31, to form an integral module. The module is assembled into a rectangular frame composed of the first separating member 70, the second separating member 80, and the two end plates 11 by pressing with tooling. After the tooling is removed, the battery pack 20 rebounds and tightly presses against the first separating member 70 and the second separating member 80. The battery packs 20 form an entity through the compressive force of the reinforcing member 31, the first separating member 70, the second separating member 80, the cover plate 50, and the top plate, enhancing the overall stiffness of the battery 100. This eliminates the need for additional separating members, saving the space and weight.

The first separating member 70 and the second separating member 80 may be connected to the end plate 11 by welding or bolts, and connected to the bottom plate 40 by welding, FDS, or adhering, or may be integrally formed by casting.

In the second direction Y, the first separating member 70 and the second separating member 80 are respectively spaced apart from the adjacent second side plates 12. Gaps are present between the first separating member 70 and the second separating member 80 and the adjacent second side plates 12. When the battery 100 is subjected to compressive force, the first separating member 70 and the second separating member 80 alleviate the swelling of the battery pack 20, while enhancing the stiffness of the battery 100 in the second direction Y. The gap between the first separating member 70 and the second side plate 12 may be used for placing some control chips and other components, while the gap between the second separating member 80 and the second side plate 12 may be an assembly gap. Therefore, in the second direction Y, the gap size between the second separating member 80 and the second side plate 12 may be smaller than the gap size between the first separating member 70 and the second side plate 12.

The second separating member 80 is provided with a notch portion 81, and the current collecting tube 60 passes through the notch portion 81.

The first separating member 70 is provided with a notch matching the output electrode base 23 for placing the output electrode base 23, and the output electrode base 23 is fixedly connected to the first separating member 70. The second separating member 80 is provided with a notch portion 81 matching the current collecting tube 60. The notch portion 81 may be at both ends of the second separating member 80, and the notch portion 81 can fix the current collecting tube 60 on the second separating member 80, reducing the movement of the current collecting tube 60.

Finally, in a specific application scenario, as shown in FIG. 2, the battery 100 includes the battery pack 20, the reinforcing member 31, the bottom plate 40, the cover plate 50, the frame 10, the buffer member 32, the current collecting tube 60, and the separating member. The frame 10, the bottom plate 40, and the separating member may be integrally connected by welding, FDS, adhering, or the like, or may be integrally formed by casting. In the first direction X, two adjacent battery cells 21 are connected using an adhesive. The two sides of the reinforcing member 31 are adhered to the surfaces with the maximum area of the adjacent battery cells 21. The two ends of the reinforcing member 31 extend beyond the battery pack 20 in the first direction X, so that all battery cells 21 are adhered to the reinforcing member 31 to form one integral large module. The large module is pressed by tooling and assembled into a rectangular frame formed by the first separating member 70 and the second separating member 80. After the tooling is removed, the battery pack 20 of the battery 100 rebounds and tightly presses against the separating members. The bottom of the battery pack 20 is fixed to the bottom plate 40 by adhesion. The battery packs 20 form an entity through the compressive force of the reinforcing member 31 as well as the separating members, and the cover plate 50, enhancing the overall stiffness of the battery 100, and saving the space and weight. The reinforcing member 31 has a heat exchange chamber, and the heat exchange chamber is connected to the current collecting tube 60, facilitating the flow of the heat exchange medium. The buffer member 32 wraps around the current collecting tube 60 between the battery pack 20 and the frame 10. In the first direction X, when the battery 100 is squeezed and deformed, the frame 10 is squeezed and deformed. The buffer member 32 can absorb the external impact force, and the external impact force may also be transmitted through the reinforcing member 31 to the buffer member 32 at the other end. The buffer member 32 at two ends can absorb the impact force, reducing the stress on the battery pack 20 and lowering the risk of damage, liquid leakage, or fire caused by compressive force on the battery pack 20.

Although this application has been described with reference to the preferred embodiments, various modifications to this application and replacements of the components therein with equivalents can be made without departing from the scope of this application. In particular, as long as there is no structural conflict, the various technical features mentioned in the implementations can be combined in any manner. This application is not limited to the specific embodiments disclosed in this specification but includes all technical solutions falling within the scope of the claims.

## Claims

1. A battery, comprising:
a battery pack comprising multiple battery cells stacked along a first direction; and
a reinforcing member extending along the first direction; wherein
the reinforcing member is disposed on at least one side of the battery pack along the first direction, and the reinforcing member is connected to the battery pack.

2. The battery according to claim 1, wherein adjacent two of the multiple battery cells along the first direction are connected using an adhesive.

3. The battery according to claim 1 or 2, wherein a maximum size of the reinforcing member along the first direction is larger than a maximum size of the battery pack along the first direction.

4. The battery according to claim 3, wherein two ends of the reinforcing member along the first direction exceed the battery pack.

5. The battery according to any one of claims 1 to 4, wherein multiple reinforcing members are provided, at least two of the multiple reinforcing members are respectively located on two sides of the battery pack along the first direction, and the reinforcing members on two sides of the battery pack along the first direction are both connected to the battery pack.

6. The battery according to any one of claims 1 to 5, wherein the reinforcing member is configured to be connected to a surface with a greatest area of the battery cell.

7. The battery according to any one of claims 1 to 6, wherein the reinforcing member has a heat exchange chamber, and the heat exchange chamber is used for accommodating a heat exchange medium.

8. The battery cell according to claim 7, wherein the reinforcing member is adhered to the battery cell.

9. The battery according to any one of claims 1 to 8, wherein multiple battery packs are provided, multiple reinforcing members are provided, the multiple battery packs are side by side along a second direction, and the second direction intersects the first direction, and
one of the multiple reinforcing members is located between adjacent two of the battery packs and is connected to the two adjacent battery packs.

10. The battery according to any one of claims 1 to 9, wherein the battery further comprises an end plate, the end plate is located at an end of the reinforcing member along the first direction, and the reinforcing member is connected to the end plate.

11. The battery according to claim 10, wherein the battery further comprises a bottom plate and a cover plate, the bottom plate and the cover plate are respectively located on two mutually parallel side surfaces of the battery pack along the first direction, and the bottom plate is opposite the cover plate, and
the reinforcing member is connected to at least one of the bottom plate and the cover plate.

12. The battery according to any one of claims 1 to 9, wherein the battery further comprises a frame, the frame encloses a middle space, and the battery pack is located in the middle space, and
the battery further comprises a buffer member, and along the first direction, the buffer member is located between the battery pack and an inner surface of the frame.

13. The battery according to claim 12, wherein multiple battery packs are provided, multiple reinforcing members are provided, the reinforcing members and the battery packs are arranged alternately, and the buffer member is sandwiched between adj acent two of the reinforcing members.

14. The battery according to claim 13, wherein the reinforcing member comprises the heat exchange chamber, the heat exchange chamber is used for accommodating the heat exchange medium, the battery further comprises a current collecting tube, and the current collecting tube is connected to an end of the reinforcing member along the first direction to communicate with the heat exchange chamber, and
the buffer member comprises an avoidance groove, and the avoidance groove corresponds to the current collecting tube in position.

15. The battery according to claim 14, wherein the avoidance groove is located on a surface of the buffer member away from the battery cell along the first direction.

16. The battery according to claim 14, wherein the battery further comprises a bottom plate, the bottom plate is connected to the frame, and a bottom of the buffer member facing the bottom plate is provided with a guiding structure.

17. The battery according to any one of claims 12 to 16, wherein the battery further comprises a separating member, the separating member is located in the frame, the separating member extends along the first direction and is connected to an inner surface of the frame, so as to separate the middle space into at least two sub-spaces, and at least one of the at least two sub-spaces is used for accommodating the battery pack and the reinforcing member.

18. An electric apparatus, wherein the electric apparatus comprises the battery according to any one of claims 1 to 17, and the battery is configured to supply electric energy for the electric apparatus.
